# EUROPEAN PATENT APPLICATION

(11) **EP 4 826 774 A1**
(43) Date of publication of application: **21.10.2026**
(21) Application number: 24904254.0
(22) Date of filing: 10.12.2024
(51) Int. Cl.: H01M 4/134, H01M 4/66, H01M 4/1395

(54) **LITHIUM METAL ELECTRODE FOR LITHIUM SECONDARY BATTERY AND METHOD OF MAKING SAME**

(30) Priority: 15.12.2023 KR 20230183728
(71) Applicant: POSCO Holdings Inc., Pohang-si, Gyeongsangbuk-do 37859 (KR)
(72) Inventor: BAE, Hongyeul, Pohang-si, Gyeongsangbuk-do 37859 (KR); LEE, Hochun, Dalseong-gun, Daegu, 42988 (KR); KIM, Jin Hong, Pohang-si, Gyeongsangbuk-do 37859 (KR); LEE, Garam, Pohang-si, Gyeongsangbuk-do 37859 (KR); YANG, Changeui, Dalseong-gun, Daegu, 42988 (KR); EOM, Sewon, Dalseong-gun, Daegu, 42988 (KR)
(74) Representative: Pfenning, Meinig & Partner mbB
(86) International application number: PCT/KR2024/020219
(87) International publication number: WO 2025/127689

(57) **Abstract**

The present invention relates to a lithium metal electrode and a method for manufacturing the same. The lithium metal electrode of the present invention includes a current collector, a metal layer positioned on at least one surface of the current collector and including a lithium alloy, a protective layer positioned on the metal layer, and a coating layer positioned on a surface of the protective layer and including at least a portion of LiF, wherein, when measured by X-ray photoelectron spectroscopy (XPS), an intensity of a peak appearing at 684 eV to 686 eV is greater than an intensity of a peak appearing at 687 eV to 689 eV.

## Description

### [TECHNICAL FIELD]

The present invention relates to a lithium secondary battery, and more particularly, to a lithium metal electrode for a lithium secondary battery and a method for manufacturing the same.

### [BACKGROUND ART]

In order to reduce the cost and increase the energy density of secondary batteries, it has become essential to use a lithium metal electrode as a negative electrode of a lithium secondary battery. Specifically, all-solid-state batteries have recently attracted attention as next-generation batteries for high energy density applications such as electric vehicles (EVs).

Since all-solid-state batteries do not use a liquid electrolyte, they have advantages in various aspects, such as excellent stability, high-voltage operation, improved energy density of a battery pack due to reduction of cooling- and safety-related auxiliary materials, and operability over a wide temperature range. In order to substantially realize high energy density in such an all-solid-state battery, a thick graphite-based negative electrode material having low capacity should be replaced with lithium, which is thin and has high capacity, and, in view of economic feasibility and energy density, a thin-film lithium metal electrode having a thickness of substantially 10 µm to 20 µm is required.

In general, in order to form a lithium metal electrode, a method of rolling a copper foil, which is a current collector, and a lithium foil, or a method of depositing a lithium thin film on a copper foil has been used. However, rolling has disadvantages in that it is difficult to achieve a large width and a thin film, and deposition has a disadvantage of low economic feasibility. In order to solve these disadvantages, a method of forming a negative electrode by electrodepositing lithium on a copper foil using an electrochemical method has been proposed.

However, when a lithium metal electrode is used as a negative electrode in an all-solid-state battery, a high-resistance phase is generated by a reaction between lithium and an all-solid-state electrolyte, and lithium dendrites are continuously generated or high-resistance lithium by-products are generated due to local non-uniformity of current density during charging and discharging. As a result, problems occur in that the battery cannot function due to a short circuit or overvoltage during charging and discharging, or capacity is reduced.

In particular, when a single solvent is used during lithium electrodeposition, although ionic conductivity of the electrolyte solution itself is high, a salt decomposition reaction is first performed upon electron supply, thereby causing problems in that lifespan characteristics of the battery deteriorate and dendrites grow excessively.

### [DETAILED DESCRIPTION OF THE INVENTION]

### [Technical Problem]

A lithium metal electrode for a lithium secondary battery according to an embodiment of the present invention is intended to provide a lithium metal battery in which lifespan characteristics of a battery are improved due to high ionic conductivity during battery operation and dendrite growth is prevented.

A method for manufacturing a lithium metal electrode for a lithium secondary battery according to another embodiment of the present invention is intended to provide a method for manufacturing a lithium metal electrode for a lithium secondary battery having the above-described advantages.

### [Technical Solution]

A lithium metal electrode according to an embodiment of the present invention includes a current collector, a metal layer positioned on at least one surface of the current collector and including a lithium alloy, a protective layer positioned on the metal layer, and a coating layer positioned on a surface of the protective layer and including at least a portion of LiF.

In an embodiment, the coating layer of the lithium metal electrode may satisfy the following Equation 1 when measured by X-ray photoelectron spectroscopy (XPS). <Equation 1> $Imax \left(LiF\right) / Imax \left({FSO}_{2}\right) \geq 1.5$

In Equation 1, an intensity of a peak appearing at 684 eV to 686 eV is referred to as Imax(LiF), and an intensity of a peak appearing at 687 eV to 689 eV is referred to as Imax(FSO₂).

In an embodiment, Equation 1 may be 2.0 or more.

In an embodiment, the coating layer may satisfy the following Equation 2 when measured by X-ray photoelectron spectroscopy (XPS). <Equation 2> $\left[Area\left(LiF\right)\right] / \left[Area\left(LiF\right)+Area\left({FSO}_{2}\right)\right] \times 100 \geq 55.0$

In Equation 2, an area of a peak appearing at 684 eV to 686 eV is referred to as Area(LiF), and an area of a peak appearing at 687 eV to 689 eV is referred to as Area(FSO₂).

In an embodiment, the coating layer may satisfy the following Equation 3 when measured by X-ray photoelectron spectroscopy (XPS). <Equation 3> $Imax \left(N-{SO}_{x}\right) / Imax \left({{NO}_{3}}^{-}\right) \geq 0.30$

In Equation 3, an intensity of a peak appearing at 399 eV to 401 eV is referred to as Imax(N-SOₓ), and an intensity of a peak appearing at 407 eV to 409 eV is referred to as Imax(NO₃).

In an embodiment, the coating layer may satisfy the following Equation 4 when measured by X-ray photoelectron spectroscopy (XPS). <Equation 4> $\left[Area\left(N-{SO}_{x}\right)\right] / \left[Area\left(N-{SO}_{x}\right)+Area\left({{NO}_{3}}^{-}\right)\right] \times 100 \geq 10.0$

In Equation 4, an area of a peak appearing at 399 eV to 401 eV is referred to as Area(N-SOₓ), and an area of a peak appearing at 407 eV to 409 eV is referred to as Area(NO₃).

In an embodiment, a total resistance (Rtotal) of an interface between the protective layer and the coating layer may be 1.5 Ω·cm² to 4.6 Ω·cm². In an embodiment, the intensity of the peak appearing at 684 eV to 686 eV, Imax(LiF), may be 25,000 or more. In an embodiment, the intensity of the peak appearing at 687 eV to 689 eV, Imax(FSO₂), may be 11,000 or less.

A method for manufacturing a lithium metal electrode according to another embodiment of the present invention includes: forming a coating layer on at least one surface of a current collector using a coating composition including a lithiophilic component; forming a protective layer on a surface of the coating layer; placing the current collector on which the coating layer and the protective layer are formed in a plating solution including a plurality of solvents, and then placing a lithium supply source at a predetermined distance from the protective layer; and applying a current between the current collector and the lithium supply source to form a metal layer including a lithium alloy in which the lithiophilic component included in the coating layer and lithium precipitated from the lithium supply source are alloyed, wherein at least one solvent among the plurality of solvents has a dielectric constant of 25 or more.

In an embodiment, at least one solvent among the plurality of solvents may have a dielectric constant of 25 to 80. In an embodiment, a content of the solvent having a dielectric constant of 25 or more may be 3 mol% to 40 mol% based on 100 mol% of all solvents.

In an embodiment, the solvent having a dielectric constant of 25 or more may be a sulfone-based solvent. In an embodiment, the sulfone-based solvent may include at least one of ethyl methyl sulfone (EMS), diphenyl sulfone (DPheS), sulfolane (SL), dimethyl sulfone, diethyl sulfone (DS), and methyl sulfone.

In an embodiment, the step of applying a current between the current collector and the lithium supply source to form the metal layer including the lithium alloy in which the lithiophilic component included in the coating layer and lithium precipitated from the lithium supply source are alloyed may be a step of electrodepositing at a maximum current density in a range of 6 mA/cm² to 12 mA/cm².

### [Advantageous Effects]

A lithium metal electrode for a lithium secondary battery according to an embodiment of the present invention is intended to provide a lithium metal electrode in which lifespan characteristics of a battery are improved and dendrite growth is prevented by including a coating layer positioned on a surface of a protective layer and including at least a portion of LiF that induces electrodeposition.

A method for manufacturing a lithium metal electrode for a lithium secondary battery according to another embodiment of the present invention is intended to provide a lithium metal electrode having the above-described advantages by including a plurality of solvents in a plating solution during electrodeposition and by using, as at least one of the plurality of solvents, a solvent having a high dielectric constant, thereby improving salt decomposition dissociation, suppressing a salt decomposition reaction during electrodeposition, promoting a solvent decomposition reaction, and forming a coating layer including at least a portion of LiF.

### [BRIEF DESCRIPTION OF THE DRAWINGS]

FIGS. 1A to 1F show lithium metal electrodes manufactured according to an embodiment.
FIG. 2 is a schematic view of a method for manufacturing a lithium metal electrode according to the present invention.
FIG. 3 is a scanning electron microscope (SEM) photograph of a cross-section when an alloy material coating layer is formed on a current collector according to an embodiment of the present invention.
FIG. 4A is a scanning electron microscope (SEM) photograph of a surface when an ion concentration protective layer is formed on a current collector coated with an alloy material according to an embodiment of the present invention, and FIG. 4B is a scanning electron microscope (SEM) photograph of a cross-section thereof.
FIG. 5 is a graph showing lifespan evaluation of all-solid-state battery cells using lithium negative electrodes according to Examples and Comparative Examples of the present invention.
FIG. 6 is a graph comparing XPS surface analysis of surfaces of protective layers of electrodeposited lithium negative electrodes according to Examples and Comparative Examples of the present invention.
FIG. 7 is a graph analyzing impedance and resistance of electrodeposited lithium according to Examples and Comparative Examples of the present invention.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

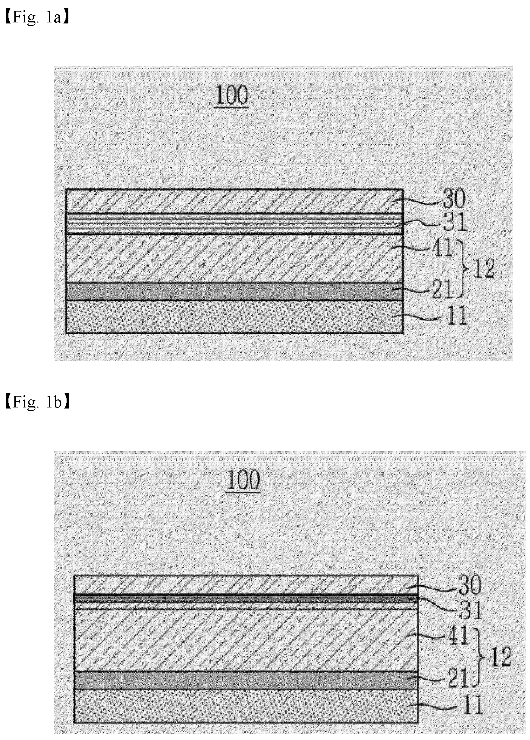

FIGS. 1A to 1F show a lithium metal electrode 100 manufactured according to an embodiment.

Referring to FIGS. 1A to 1C, the lithium metal electrode 100 according to an embodiment includes a current collector 11 and a metal layer 12 positioned on at least one surface of the current collector 11, and further includes a protective layer 30 positioned on another surface of the metal layer 12 facing the current collector 11.

The current collector 11 may be a member for electrical connection in a lithium secondary battery. The current collector 11 may have a form of a foil, but is not limited thereto, and may have, for example, a form of a mesh, a foam, a rod, a wire, or a sheet woven from wires or fibers.

As the current collector 11, a material having electrical conductivity and having limited reactivity with lithium may be used. Specifically, the material of the current collector 11 may be, for example, copper, nickel, titanium, stainless steel, gold, platinum, silver, tantalum, ruthenium, an alloy thereof, carbon, a conductive polymer, a composite fiber in which a conductive layer is coated on a non-conductive polymer, or a combination thereof.

In an embodiment, the current collector 11 may have a thickness of 1 µm to 50 µm. When the thickness of the current collector 11 is excessively large, there is a problem in that the weight of the battery increases and energy density of the battery decreases. When the thickness of the current collector 11 is excessively small, there is a risk of overheating damage during high-current operation, and the current collector may be damaged by tension during a battery manufacturing process.

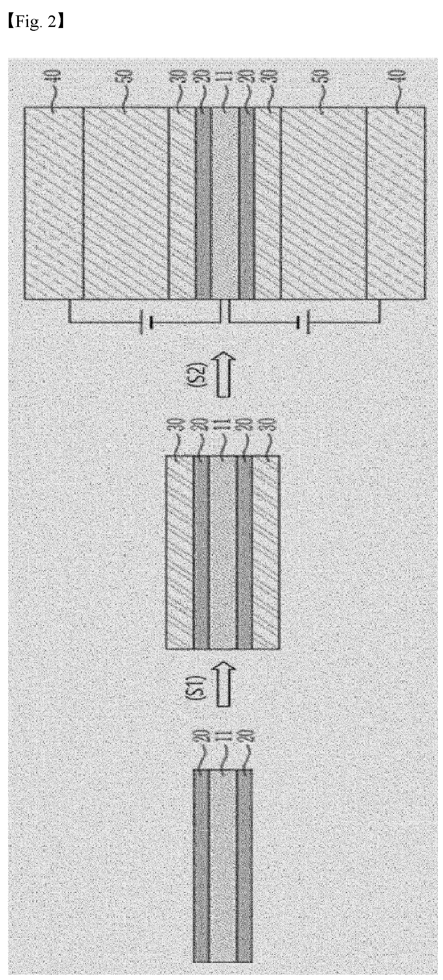

The metal layer 12 may be positioned on the current collector 11 and may include a lithium alloy layer 21 including a lithium alloy and a lithium metal layer 41 positioned on the lithium alloy layer 21. The lithium alloy layer 21 may be a layer including a lithium alloy in which a lithiophilic component included in the metal layer 12 on the current collector 11 and lithium precipitated from a lithium supply source (40 in FIG. 2) are alloyed by applying a current between the current collector 11 and the lithium supply source.

When an electrodeposition process is performed by applying a high current in order to increase the rate of electrodeposition when forming the metal layer 12, performance of a lithium secondary battery may deteriorate. However, when the metal layer 12 is formed in a structure including the lithium alloy layer 21 containing a lithium component as in the present embodiment, even if an electrodeposition process is performed by applying a high current, excessive generation of fine lithium particles or destruction of the protective layer 30 positioned on a surface of the lithium metal layer 41 already generated in the electrodeposition process can be prevented.

Specifically, since the metal layer 12 of an embodiment includes the lithium alloy layer 21 containing a lithium component, when the lithium metal layer 41 is formed on the lithium alloy layer 21 by applying a high current in the electrodeposition process, initially generated lithium particles may be induced to grow well, thereby forming particles having a coarse structure, and at the same time the lithium metal layer 41, and consequently the metal layer 12, may have a uniform surface.

Accordingly, performance of a secondary battery to which the lithium metal electrode according to the present embodiment is applied, specifically charge/discharge characteristics, can be remarkably improved. In addition, since a lithium metal electrode for a secondary battery having high performance can be manufactured even when an electrodeposition process is performed at a high rate by applying a high current, productivity of the lithium metal electrode for a secondary battery can also be remarkably improved.

The lithium alloy layer 21 may be an alloy of lithium and a lithiophilic metal, wherein the lithiophilic metal may be one or more selected from the group consisting of In, Ag, Sn, Zn, Si, Al, and Bi, but is not limited thereto.

In the present embodiment, the lithium alloy layer 21 includes a lithiophilic metal. When the lithium alloy layer 21 includes a lithiophilic metal as described above, since it includes a lithiophilic metal having high electronic conductivity, electrons are smoothly supplied from the current collector, lithium ions are reduced, and electrodeposition of the lithium metal layer can be easily performed. The metal layer 21 serves to help lithium be more effectively precipitated under the protective layer 30 during a charging process of a battery.

In an embodiment, the metal layer 12 may have a thickness of 1 µm to 100 µm, and more specifically 5 µm to 30 µm. When the thickness of the metal layer 12 is excessively large, when the lithium metal electrode of the present embodiment is applied to a secondary battery, there is a problem in that the weight and volume of the battery increase and energy density decreases. In addition, since time and cost of an electrodeposition process increase in proportion to thickness when forming the metal layer 12, the thickness of the metal layer 12 is preferably 100 µm or less.

When the thickness of the metal layer 12 is excessively small, when the lithium metal electrode of the present embodiment is applied to a secondary battery, there is a problem in that charge/discharge lifespan of the battery deteriorates. Specifically, during charging and discharging of the battery, lithium in the battery is gradually consumed due to side reactions between lithium included in the negative electrode active material layer, that is, the metal layer of the present invention, and the electrolyte, thereby reducing battery capacity, and since an amount of lithium capable of replenishing lithium consumed during charging and discharging becomes small, charge/discharge lifespan of the battery decreases. Accordingly, the thickness of the metal layer 12 is preferably 1 µm or more.

The protective layer 30 may be positioned on the metal layer 12 and may include amorphous carbon. When lithium metal is used as a negative electrode in an all-solid-state battery, a high resistance is generated by a reaction between the all-solid-state electrolyte and lithium, and lithium dendrites are continuously generated or high-resistance lithium by-products are generated due to local non-uniformity of current density during charging and discharging, whereby failure occurs due to a short circuit or overvoltage during charging and discharging, or battery capacity deteriorates.

The lithium metal electrode according to an embodiment includes a protective layer including amorphous carbon, thereby improving not only output characteristics and lifespan characteristics of the lithium metal electrode but also structural stability.

Specifically, by including the protective layer 30 including amorphous carbon, the lithium metal electrode of the present embodiment may serve not only to improve ionic conductivity, but also to improve strength of the protective layer 30 and physically block dendrites during dendrite growth in the lithium electrode, thereby preventing a short circuit between electrodes and improving charge/discharge lifespan.

The amorphous carbon may be one or more selected from the group consisting of acetylene black, Super P black, carbon black, Denka black, activated carbon, graphite, hard carbon, and soft carbon, but is not limited thereto.

In an embodiment, the protective layer 30 may include a binder. The binder may be an aqueous binder, and the aqueous binder may be one or more selected from the group consisting of rubber-based binders selected from acrylonitrile-butadiene rubber, styrene-butadiene rubber (SBR), and acrylic rubber, and polymer resins such as hydroxyethyl cellulose, carboxymethyl cellulose, and polyvinylidene fluoride, but is not limited thereto.

Here, the binder may be added in an amount of 1 part by weight to 15 parts by weight, and specifically 3 parts by weight to 10 parts by weight, based on the weight of a slurry formed by mixing the amorphous carbon and water. When the content of the binder satisfies the above range, particles constituting the protective layer can be effectively bound to form a protective layer having excellent performance without causing deterioration of battery energy density due to an increase in weight and volume, thereby further improving lifespan characteristics of the secondary battery.

When the content of the binder is excessively smaller than the above range, there is a problem in that binding force between particles is reduced in forming the protective layer, and when the content of the binder is excessively greater than the above range, not only does energy density decrease, but also resistance of the protective layer greatly increases, thereby hindering lithium ion conduction.

In an embodiment, the protective layer 30 may have a thickness of 0.01 µm to 50 µm. Specifically, the protective layer 30 may have a thickness of 1 µm to 20 µm. When the thickness of the protective layer satisfies the above range, due to effects obtained by including the amorphous carbon and the silicate clay mineral, formation of lithium dendrites on the surface of the protective layer can be prevented, and lithium ions can pass through and be conducted well inside the protective layer, whereby lithium can be precipitated on a lower surface of the protective layer.

When the thickness of the protective layer is excessively small, there is a problem in that the protective layer cannot function as a protective layer. When the thickness of the protective layer is excessively large, there are problems in that resistance of the protective layer becomes too high, which may cause an increase in overvoltage during operation of a secondary battery, and battery energy density decreases due to increases in weight and volume. However, the thickness of the protective layer may be variably adjusted according to design of the secondary battery structure.

In an embodiment, the lithium metal electrode may include a coating layer 31 disposed in at least a partial region inside the protective layer 30, between the metal layer 12 and the protective layer 30, and/or on the protective layer 30. Specifically, the coating layer 31 may be disposed in at least a partial region inside the protective layer 30, may be disposed between the metal layer 12 and the protective layer 30, may be simultaneously disposed inside the protective layer 30 and between the metal layer 12 and the protective layer 30, or may be disposed on the protective layer 30.

The coating layer 31 is formed by a reaction between electrodeposited lithium metal of the lithium supply source 40 and a plating solution during manufacture of the metal layer 12, and the thickness, composition, properties, and the like of the coating layer can be controlled by controlling the composition of the plating solution used and conditions of the electrodeposition process.

In an embodiment, the coating layer 31 may include at least a portion of LiF. LiF may be formed by including, as at least one solvent among a plurality of solvents used in the electrodeposition process, a solvent having a high dielectric constant. Specifically, by increasing salt decomposition dissociation of the solvent of the plating solution for electrodeposition, a salt decomposition reaction is suppressed and a solvent decomposition reaction is promoted during electrodeposition, whereby a sufficient LiF coating layer may be formed inside and/or on the surface of the protective layer. By including the coating layer 31 including at least a portion of LiF, lifespan can be improved and dendrite growth can be prevented due to high ionic conductivity during battery operation.

In an embodiment, when the coating layer 31 is measured by X-ray photoelectron spectroscopy (XPS), the intensity of a peak appearing at 684 eV to 686 eV may be greater than the intensity of a peak appearing at 687 eV to 689 eV. Specifically, the intensity of the peak appearing at 684 eV to 686 eV means the intensity of a LiF peak, and the intensity of the peak appearing at 687 eV to 689 eV means the intensity of a FSO₂ peak. FSO₂ is a product of a salt decomposition reaction, hinders smooth movement of lithium ions on the electrode surface, and may hinder stable electrodeposition of lithium. In contrast, LiF is a main product of a solvent decomposition reaction, alleviates additional electrolyte decomposition, assists smooth Li ion conduction, reduces interfacial resistance, and can contribute to stable electrodeposition of lithium. As described above, it was confirmed that the coating layer 31 contributing to stable electrodeposition of lithium was included because the peak intensity of Li was calculated to be greater than the peak intensity of FSO₂.

In an embodiment, the coating layer 31 may satisfy the following Equation 1 when measured by X-ray photoelectron spectroscopy (XPS). <Equation 1> $Imax \left(LiF\right) / Imax \left({FSO}_{2}\right) \geq 1.5$

In Equation 1, an intensity of a peak appearing at 684 eV to 686 eV is referred to as Imax(LiF), and an intensity of a peak appearing at 687 eV to 689 eV is referred to as Imax(FSO₂).

Equation 1 is one index for the degree of LiF generation and may be 1.5 or more. Specifically, Equation 1 may be 2.0 or more, more specifically 2.5 or more to 5.0 or less, and still more specifically 2.5 or more to 3.1 or less.

In an embodiment, the coating layer 31 may satisfy the following Equation 2 when measured by X-ray photoelectron spectroscopy (XPS). <Equation 2> $\left[Area\left(LiF\right)\right] / \left[Area\left(LiF\right)+Area\left({FSO}_{2}\right)\right] \times 100 \geq 55.0$

In Equation 2, an area of a peak appearing at 684 eV to 686 eV is referred to as Area(LiF), and an area of a peak appearing at 687 eV to 689 eV is referred to as Area(FSO₂).

Equation 2 is one index for the degree of LiF generation and may be 55.0 or more. Specifically, Equation 2 may be 60.0 or more, more specifically 60.0 or more, more specifically 70 or more to 100 or less, more specifically 70 or more to 85 or less, and still more specifically 70 or more to 83 or less.

When the values of Equation 1 and Equation 2 satisfy the above ranges, it can be confirmed that LiF, which is a main product of a solvent decomposition reaction, is appropriately formed inside the protective layer 30, and therefore, when applied to a battery, interfacial resistance can be reduced, thereby contributing to more stable electrodeposition of lithium. When the values of Equation 1 and Equation 2 do not satisfy the above ranges, the content of a product of a salt decomposition reaction becomes excessively large, thereby hindering smooth movement of lithium ions on the electrode surface and hindering stable electrodeposition of lithium.

In an embodiment, the intensity of the peak appearing at 684 eV to 686 eV, Imax(LiF), may be 25,000 or more. Specifically, the intensity of the peak may be 27,500 or more, more specifically 28,000 or more, and still more specifically 29,000 or more.

When the intensity of the peak is below the lower limit of the above range, there is a problem in that formation of LiF, which is a main product of a solvent decomposition reaction, is insufficient, thereby reducing ionic conductivity and mechanical strength of the protective layer.

In an embodiment, the intensity of the peak appearing at 687 eV to 689 eV, Imax(FSO₂), may be 11,000 or less. Specifically, the intensity of the peak may be 10,500 or less, and more specifically 10,000 or less.

When the intensity of the peak exceeds the upper limit of the above range, there is a problem in that, as the solvent decomposition reaction is suppressed, LiF, which is a product thereof, is not sufficiently generated.

In an embodiment, the coating layer 31 may satisfy the following Equation 3 when measured by X-ray photoelectron spectroscopy (XPS). <Equation 3> $Imax \left({{NO}_{3}}^{-}\right) / Imax \left(N-{SO}_{x}\right) \geq 0.30$

In Equation 3, an intensity of a peak appearing at 399 eV to 401 eV is referred to as Imax(N-SOₓ), and an intensity of a peak appearing at 407 eV to 409 eV is referred to as Imax(NO₃).

Equation 3 is one index for solvent decomposition degree and may be 0.30 or more. Specifically, Equation 3 may be 0.32 or more, more specifically 0.40 or more to 0.70 or less, and still more specifically 0.45 or more to 0.60 or less.

In an embodiment, the coating layer 31 may satisfy the following Equation 4 when measured by X-ray photoelectron spectroscopy (XPS). <Equation 4> $\left[Area\left({{NO}_{3}}^{-}\right)\right] / \left[Area\left(N-{SO}_{x}\right)+Area\left({{NO}_{3}}^{-}\right)\right] \times 100 \geq 10.0$

In Equation 4, an area of a peak appearing at 399 eV to 401 eV is referred to as Area(N-SOₓ), and an area of a peak appearing at 407 eV to 409 eV is referred to as Area(NO₃).

Equation 4 is one index for solvent decomposition degree and may be 10.0 or more. Specifically, Equation 4 may be 20 or more, more specifically 20 or more to 50 or less, and still more specifically 20 or more to 25 or less.

In Equations 3 and 4, NO₃⁻ may be a solvent decomposition product, and N-SOₓ may be a salt decomposition reaction product. When Equations 3 and 4 satisfy the above ranges, it can be confirmed that a salt decomposition reaction is suppressed and a solvent decomposition reaction is promoted, so that generation of main products by the solvent decomposition reaction is appropriately formed. Accordingly, when applied to a battery, interfacial resistance can be reduced, thereby contributing to more stable electrodeposition of lithium. When the values of Equations 3 and 4 do not satisfy the above ranges, the content of products of a salt decomposition reaction becomes excessively large, thereby hindering smooth movement of lithium ions on the electrode surface and hindering stable electrodeposition of lithium.

In an embodiment, the total resistance (Rtotal) of an interface between the protective layer 30 and the coating layer 31 may be 1.5 Ω·cm² to 4.6 Ω·cm². Specifically, the total resistance may be 1.5 Ω·cm² to 3.5 Ω·cm², and more specifically 1.8 Ω·cm² to 3.1 Ω·cm².

In an embodiment, a charge transfer resistance (Rct) between the protective layer 30 and the coating layer 31 may be 0.5 Ω·cm² to 1.5 Ω·cm². The charge transfer resistance is a resistance generated in a process in which lithium ions moved through an electrolyte undergo an oxidation-reduction reaction at an interface of an electrode material, and a lower value may mean that an oxidation-reduction reaction of lithium ions occurs more easily and is advantageous for electrodeposition. The charge transfer resistance may be 0.8 Ω·cm² to 1.5 Ω·cm², and more specifically 1.0 Ω·cm² to 1.3 Ω·cm².

In an embodiment, a solid electrolyte interphase resistance (RSEI) between the protective layer 30 and the coating layer 31 may be 0.5 Ω·cm² to 1.2 Ω·cm². The SEI layer resistance is a resistance to lithium ion conduction of the coating layer 31, and a lower value may mean that lithium ion conduction is easier. The SEI layer resistance may be 0.6 Ω·cm² to 1.0 Ω·cm², and specifically 0.7 Ω·cm² to 0.9 Ω·cm².

When the above-described resistance values exceed the upper limits of the above ranges, resistance to lithium ion conduction and the oxidation-reduction reaction of lithium ions increases excessively, thereby causing overvoltage in an electrodeposition process, or causing overvoltage during charging and discharging when configured as a secondary battery, resulting in deterioration of battery lifespan.

The coating layer 31 may have a thickness of 2 nm to 2 µm. Specifically, the coating layer may have a thickness of 10 nm to 500 nm. When the thickness of the coating layer 31 is excessively large, lithium ion conductivity decreases and interfacial resistance increases, thereby deteriorating charge/discharge characteristics when applied to a battery. When the thickness of the coating layer 31 is excessively small, the coating layer 31 may be easily lost in the process of applying the lithium metal electrode according to the embodiment to a battery. Accordingly, the coating layer 31 may have a small thickness within the above thickness range and may be uniformly and densely formed over the entire surface of the metal layer 12 and the protective layer 30.

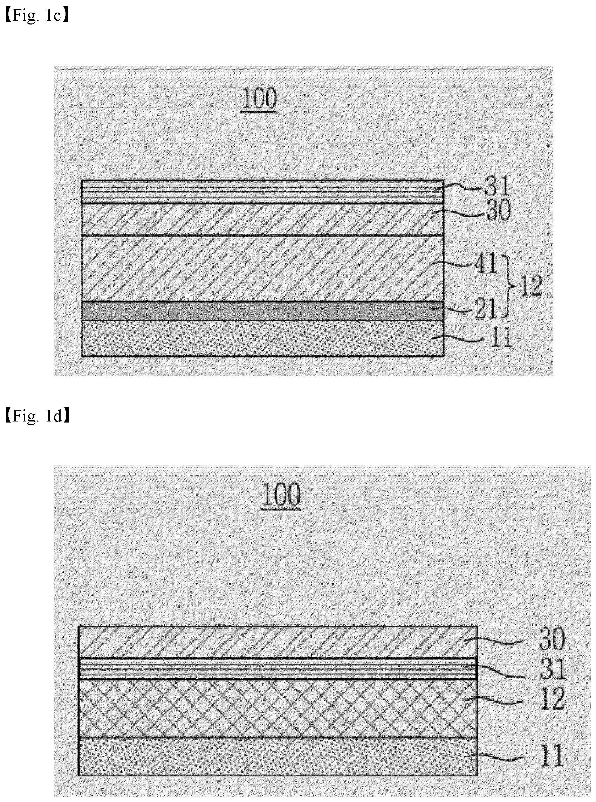

Referring to FIGS. 1D to 1F, in an embodiment, the lithium metal electrode 100 includes the current collector 11 and the metal layer 12 positioned on at least one surface of the current collector 11 and configured by mixing lithium and a lithium alloy. Here, the lithium alloy may be formed by alloying a lithiophilic component included in the metal layer 30 formed on the current collector 11 and lithium precipitated from the lithium supply source 40 by applying a current between the current collector 11 and the lithium supply source 40.

The metal layer 12 may include a lithiophilic metal. Here, the lithiophilic metal may be, for example, one or more selected from the group consisting of In, Ag, Sn, Zn, Si, Al, and Bi, but is not limited thereto.

In an embodiment, the metal layer 12 includes a lithiophilic metal. When the metal layer 12 including a lithiophilic metal is formed as described above, free energy of nucleation can be lowered in an early stage of nucleation of lithium particles in the electrodeposition process, and thus a lithium metal layer having a coarse particle structure can be formed even under high-current and overvoltage conditions.

In an embodiment, the metal layer 12 may have a thickness of 1 µm to 100 µm, and more specifically 5 µm to 30 µm. In an embodiment, when the metal layer 12 satisfies the above thickness range, there is an advantage in that energy density of a battery can be maximized while improving charge/discharge lifespan of the battery, and time and cost of an electrodeposition process can be minimized when forming the metal layer 12.

When the thickness of the metal layer is too small, initial Coulombic efficiency is reduced due to initial irreversibility, and charge/discharge performance deteriorates because surplus lithium is insufficient. When the thickness of the metal layer is too large, energy density of the battery decreases, and process time and the amount of metal raw materials used increase when forming the metal layer.

In an embodiment, the metal layer 12 includes the protective layer 30 positioned on a surface of the metal layer 12, and may include the coating layer 31 inside and/or on a surface of the protective layer 30. Detailed descriptions of the protective layer 30 and the coating layer 31 may refer to the description provided above with reference to FIG. 1A.

FIG. 2 is a schematic view of a method for manufacturing a lithium metal electrode according to the present invention.

Referring to FIG. 2, a method for manufacturing a lithium metal electrode according to an embodiment includes forming a coating layer 20 on at least one surface of a current collector 11 using a coating composition including a lithiophilic component; forming a protective layer 30 on a surface of the coating layer 20 using a slurry including amorphous carbon; placing the current collector 11 on which the coating layer 20 and the protective layer 30 are formed in a plating solution 50, and then placing a lithium supply source 40 at a predetermined distance from the protective layer 30; and applying a current between the current collector and the lithium supply source 40 to form a metal layer including a lithium alloy in which the lithiophilic component included in the coating layer and lithium precipitated from the lithium supply source 40 are alloyed.

The step of forming the coating layer 20 on at least one surface of the current collector 11 using the coating composition including the lithiophilic component may include coating an alloy material on at least one surface of the current collector. The alloy material may be, for example, a lithiophilic metal, and the lithiophilic metal may be one or more selected from the group consisting of In, Ag, Sn, Zn, Si, Al, and Bi, but is not limited thereto.

In an embodiment, the step of forming the coating layer 20 may be performed using at least one method of electroplating, electroless plating, sputtering, electron beam deposition, and thermal vapor deposition. For example, the step of forming the coating layer may be performed by electroless plating.

Meanwhile, in the step of forming the coating layer 20, the thickness of the coating layer 20 formed on at least one surface of the current collector may be 0.001 µm to 10 µm, specifically 0.01 µm to 1 µm, more specifically 150 nm to 400 nm, more specifically 200 nm to 400 nm, and still more specifically 250 nm to 350 nm.

When the thickness of the coating layer 20 is excessively small, it is insufficient to perform a role of forming a lithium alloy with lithium, and when the thickness is excessively large, a large amount of cost and time are consumed to form the coating layer 20, thereby reducing production efficiency and economic feasibility, and there is a problem in that energy density decreases because the weight and mass of the battery increase. As described above, the coating layer 20 may form the metal layer 12 including the lithium alloy layer 21 through a lithium electrodeposition process. For example, the coating layer 20 may include the metal layer 12 including the lithium alloy layer 21 and the lithium metal layer 41, or may include the metal layer 12 in which lithium and a lithium alloy are mixed and disposed, and detailed descriptions thereof may refer to FIGS. 1A to 1F.

The protective layer 30 may be formed on a surface of the coating layer 20 using a slurry including amorphous carbon. The protective layer 30 may be formed by applying a slurry formed by mixing the amorphous carbon and a binder in water using at least one method among a doctor blade method, a dip method, a reverse roll method, a direct roll method, a gravure method, an extrusion method, and a brush coating method. The protective layer 30 may further include a binder.

Meanwhile, in the step of forming the protective layer 30, the thickness of the lithiumion-conduction-promoting protective layer formed on the surface of the alloy material coating layer may be 0.01 µm to 50 µm, and more specifically 1 µm to 20 µm.

After the step of forming the protective layer 30, a step of placing the current collector on which the coating layer 20 and the protective layer 30 are sequentially formed in the plating solution 50 and then placing the lithium supply source 40 at a predetermined distance from the current collector 11, and a step of applying a current between the current collector 11 and the lithium supply source 40 to form the metal layer 12 are performed.

Specifically, after the current collector 11 on which the coating layer 20 and the protective layer 30 are formed is placed in the plating solution, the lithium supply source 40 is placed at a predetermined distance from the protective layer 30. The lithium supply source 40 may be, for example, lithium metal, a lithium alloy, a foil in which the lithium metal or lithium alloy is pressed onto a current collector, a plating solution in which a lithium salt is dissolved, or the like.

The plating solution 50 may be prepared by dissolving a lithium salt in a plurality of solvents. Specifically, the lithium salt may be LiCl, LiBr, LiI, LiCO₃, LiNO₃, LiFSI, LiTFSI, LiBF₄, LiPF₆, LiAsF₆, LiClO₄, LiN(SO₂CF₃)₂, LiBOB, or a combination thereof. The concentration of the lithium salt may be 1.0 M to 3.0 M based on the entire electrolyte solution.

The plurality of solvents may include, as at least one solvent, a high-dielectric-constant solvent having a dielectric constant of 25 or more. In an embodiment, the high-dielectric-constant solvent may have a dielectric constant of 25 to 80, and specifically 28 to 45.

Conventionally, when a single solvent is used, the ability to dissociate salt is incomplete, and thus salt in a form of incompletely dissociated ion pairs is present in the plating solution. The ion pairs are easily dissociated by receiving electrons in a lithium electrodeposition process, and decomposition products of the ion pairs are accumulated on the surface. There is a problem in that FSO₂ or N-SOₓ, which is a product of a salt decomposition reaction, appears relatively large in XPS analysis. Salt decomposition products such as FSO₂ or N-SOₓ hinder smooth movement of lithium ions on the electrode surface and consequently hinder stable electrodeposition of lithium.

As in the present invention, by using a plurality of solvents and mixing and using, as at least one solvent among the plurality of solvents, a high-dielectric-constant solvent having a dielectric constant of 25 or more, salt can be sufficiently dissociated and incompletely dissociated ion pairs can be remarkably reduced. Accordingly, in a lithium electrodeposition process, electrons are mainly used to decompose incomplete ion pairs when a single solvent is used as in the conventional art, whereas in a mixed solvent, electrons preferentially contribute to reductive decomposition of the solvent. Accordingly, decomposition products of the solvent are excellently accumulated on the electrode surface. It can be confirmed by XPS analysis that products such as LiF appear relatively high as main products of the decomposition reaction of the solvent. The source of LiF may be dissociated Li⁺ ions and F in an FEC additive in the solvent.

As described above, by using a plurality of solvents and mixing and using, as at least one solvent among the plurality of solvents, a high-dielectric-constant solvent having a dielectric constant of 25 or more, the coating layer 31 including LiF decomposition products in at least a partial region is formed in the protective layer 30, thereby alleviating electrolyte decomposition, simultaneously facilitating Li ion conduction, reducing interfacial resistance, and enabling stable electrodeposition of lithium.

In an embodiment, the plurality of solvents may include a first solvent and a second solvent having a high dielectric constant. The first solvent is a non-aqueous solvent and may include, for example, one or more selected from the group consisting of ethylene carbonate, propylene carbonate, dimethyl carbonate, ethyl methyl carbonate, diethyl carbonate, 1,2-dimethoxyethane, diethylene glycol dimethyl ether, tetraethylene glycol dimethyl ether, tetrahydrofuran, 1,3-dioxolane, 1,4-dioxane, and 1,3,5-trioxane.

The second solvent, which is a high-dielectric-constant solvent, may be a sulfone-based solvent. The sulfone-based solvent is a high-dielectric-constant solvent and can facilitate formation of a LiF layer inside and/or on a surface of the protective layer 30.

In an embodiment, the sulfone-based solvent may include at least one of ethyl methyl sulfone (EMS), diphenyl sulfone (DPheS), sulfolane (SL), dimethyl sulfone, diethyl sulfone (DS), and methyl sulfone.

In an embodiment, in the plurality of solvents, the content of the solvent having a dielectric constant of 25 or more may be 3 mol% to 40 mol% based on 100 mol% of all solvents. Specifically, the content of the solvent having a dielectric constant of 25 or more may be 5 mol% to 35 mol%, and more specifically 5 mol% to 30 mol%.

When the content of the solvent having a dielectric constant of 25 or more exceeds the upper limit of the above range, there is a problem in that smooth movement of lithium ions is hindered due to an increase in viscosity of the plating solution caused by the high-dielectric-constant solvent. When the content of the solvent having a dielectric constant of 25 or more is below the lower limit of the above range, the ability to dissociate salt is incomplete, and thus there is a problem in that a large amount of salt in a form of incompletely dissociated ion pairs is present in the plating solution.

Specifically, in the present embodiment, the plating solution 50 is characterized by including a nitrogen-based compound as at least one of the lithium salt and the plurality of solvents. The nitrogen-based compound may include, for example, one or more selected from the group consisting of lithium nitrate, lithium bis(fluorosulfonyl)imide, lithium bis(trifluoromethane sulfonimide), ε-caprolactam, N-methyl-ε-caprolactam, triethylamine, and tributylamine.

Among the nitrogen-based compounds, at least one of lithium nitrate, lithium bis(fluorosulfonyl)imide, and lithium bis(trifluoromethane sulfonimide) may be used as a lithium salt.

Among the nitrogen-based compounds, at least one of ε-caprolactam, N-methyl-ε-caprolactam, triethylamine, and tributylamine may be used as a non-aqueous solvent.

In the step of applying the current to form the lithium metal layer on at least one surface of the current collector, the current density of the current applied may be in a range of 0.1 mA/cm² to 100 mA/cm², more specifically 0.2 mA/cm² to 50 mA/cm², 5 mA/cm² to 30 mA/cm², or 7 mA/cm² to 25 mA/cm².

In an embodiment, the time for applying the current may be in a range of 0.05 hours to 50 hours, and more specifically 0.25 hours to 25 hours.

In an embodiment, the step of applying the current to form the lithium metal layer on at least one surface of the current collector may be performed at least once at different current densities. The step of applying the current may be performed in multiple stages. Specifically, the step of applying the current in multiple stages may be performed by increasing the current density stepwise from a low current density to a high current density for predetermined times. For example, the step of applying the current may be performed by electrodeposition while increasing stepwise in the order of 0.1 mA/cm² to 0.3 mA/cm², 0.3 mA/cm² to 0.7 mA/cm², and 0.8 mA/cm² to 1.5 mA/cm².

In an embodiment, the step of applying the current to form the lithium metal layer 12 on at least one surface of the current collector 11 may include electrodepositing at a maximum current density in a range of 6 mA/cm² to 12 mA/cm². Specifically, the maximum current density may be in a range of 8 mA/cm² to 12 mA/cm². The maximum current density means a limit of current density at which lithium electrodeposited in the electrodeposition process can be precipitated between the protective layer 30 and the current collector 11.

The step of electrodepositing at the maximum current density may be, for example, a step finally performed after a step of precipitating in multiple stages in order to precipitate lithium between the current collector 11 and the protective layer 30. When the maximum current density satisfies the above range, lithium is appropriately precipitated between the current collector 11 and the protective layer 30, and there are advantages in that lifespan characteristics of the battery and bonding strength between the current collector 11 and the protective layer 30 are excellent.

When the maximum current density exceeds the upper limit of the above range, since lithium is precipitated on the surface of the protective layer 30, there is a problem in that a targeted stabilized electrode structure cannot be secured. When the maximum current density is below the lower limit of the above range, there is a problem of reduced productivity because the time for electrodepositing lithium increases.

In an embodiment, the step of applying the current to form the lithium metal layer on at least one surface of the current collector may include electrodepositing precipitated lithium to a thickness in a range of 5 µm to 15 µm. Specifically, the precipitated lithium may be electrodeposited to a thickness in a range of 8 µm to 12 µm. The thickness of the precipitated lithium may mean a height in a vertical direction of lithium disposed between the current collector 11 and the protective layer 30.

When the thickness of the precipitated lithium exceeds the upper limit of the above thickness range, not only does energy density of the battery decrease, but also process time and the amount of metal raw materials used increase when forming the metal layer. When the thickness of the precipitated lithium is below the lower limit of the above thickness range, there is a problem in that initial Coulombic efficiency is reduced due to initial irreversibility and charge/discharge performance deteriorates because surplus lithium is insufficient.

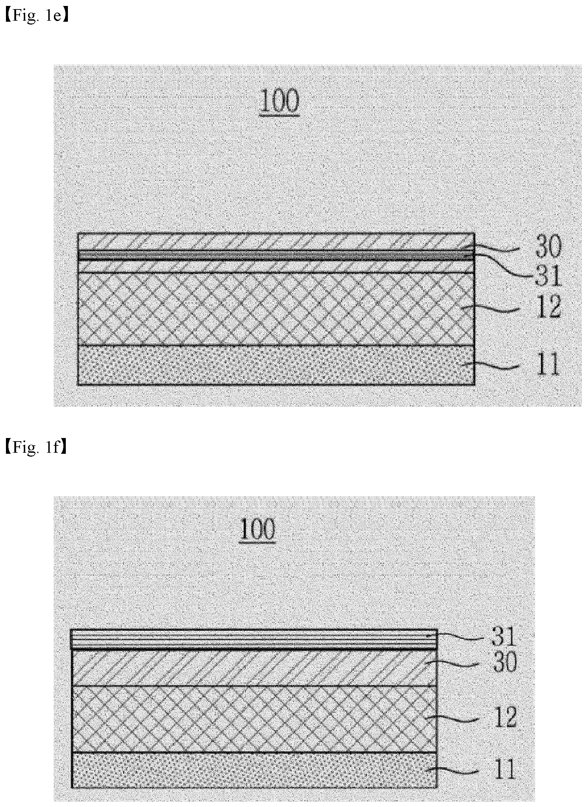

In an embodiment, in the step of applying the current to form the lithium metal layer 12 on at least one surface of the current collector 11, the thickness of the metal layer 12 including the lithium alloy may be controlled to 1 µm to 100 µm. Detailed descriptions of the thickness of the metal layer 12 may refer to the above description of FIG. 1.

As described above, in the present embodiment, a lithium metal electrode 100 having a metal layer including the lithium metal layer 12 having a coarse particle structure can be manufactured under high-current conditions by preventing excessive generation of fine lithium particles and inducing initially generated lithium particles to grow well. In addition, the metal layer thus manufactured has excellent surface uniformity.

A lithium secondary battery according to another embodiment of the present invention includes a positive electrode, a negative electrode, and an electrolyte positioned between the positive electrode and the negative electrode. Here, the negative electrode may be the lithium metal electrode according to the present invention.

In an embodiment, the lithium secondary battery may include an electrode assembly including a positive electrode including a positive electrode active material, a negative electrode which is the lithium metal electrode of the present invention, and a separator disposed between the positive electrode and the negative electrode. The electrode assembly may be wound or folded and accommodated in a battery case.

Thereafter, an electrolyte may be injected into the battery case and sealed to complete a secondary battery. At this time, the battery case may have a cylindrical, prismatic, pouch, coin, or other shape.

The positive electrode may include a positive electrode active material layer and a positive electrode current collector. The positive electrode active material layer may include, for example, a Li compound including at least one metal among Ni, Co, Mn, Al, Cr, Fe, Mg, Sr, V, La, and Ce, and at least one non-metal element selected from the group consisting of O, F, S, P, and combinations thereof.

In an embodiment, a conductive material may be further added to the positive electrode active material layer. The conductive material may be, for example, carbon black, ultrafine graphite particles, fine carbon such as acetylene black, a nano metal particle paste, or the like, but is not limited thereto.

The positive electrode current collector serves to support the positive electrode active material layer. As the positive electrode current collector, for example, an aluminum foil, a nickel foil, or a combination thereof may be used, but is not limited thereto.

As the electrolyte filled in the lithium secondary battery, a non-aqueous electrolyte solution, a solid electrolyte, or the like may be used. Specifically, the electrolyte may be a solid electrolyte. The non-aqueous electrolyte solution may include, for example, a lithium salt such as lithium hexafluorophosphate or lithium perchlorate, and a solvent such as ethylene carbonate, propylene carbonate, or butylene carbonate. In addition, as the solid electrolyte, for example, a gel polymer electrolyte in which an electrolyte solution is impregnated in a polymer electrolyte such as polyethylene oxide or polyacrylonitrile, or an inorganic solid electrolyte such as LiI or Li₃N may be used.

The separator separates the positive electrode and the negative electrode and provides a movement path for lithium ions, and any separator commonly used in lithium secondary batteries may be used. Specifically, the separator may have low resistance to ion movement of the electrolyte and excellent electrolyte solution impregnation ability. The separator may be, for example, selected from glass fibers, polyester, polyethylene, polypropylene, polytetrafluoroethylene, or combinations thereof, and may be in the form of a nonwoven fabric or a woven fabric. Meanwhile, when a solid electrolyte is used as the electrolyte, the solid electrolyte may also serve as the separator.

Hereinafter, embodiments of the present invention will be described in detail. However, these are provided as examples, and the present invention is not limited thereto, and the present invention is only defined by the scope of the claims to be described below.

### <Experimental Example>

### Preparation of Negative Electrode for Lithium Secondary Battery

### <Example 1>

### <Formation of Alloy Material Coating Layer>

A lithium metal electrode for a lithium secondary battery according to an embodiment of the present invention was prepared by forming an alloy material coating layer on a current collector, forming a lithium ion concentration protective layer thereon, and then forming a lithium or lithium alloy layer between the current collector and the protective layer through an electrodeposition process.

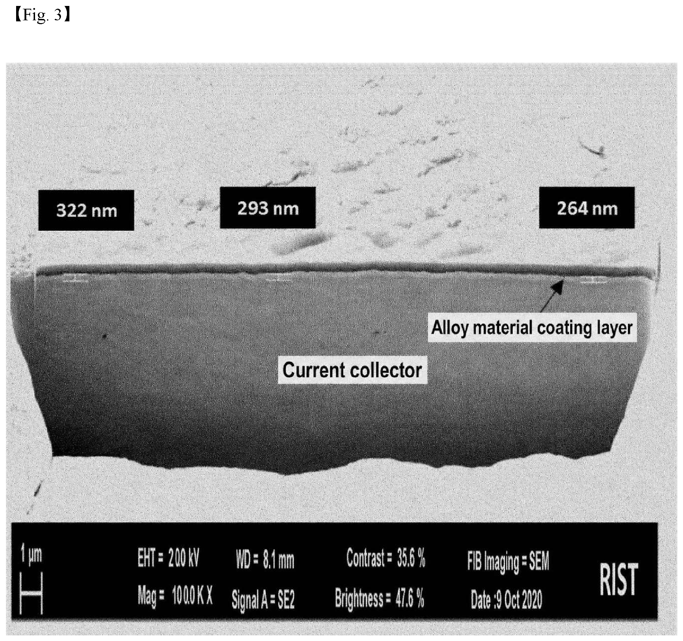

FIG. 3 is a scanning electron microscope (SEM) photograph of a cross-section when an alloy material coating layer is formed on a current collector according to an embodiment of the present invention.

Referring to FIG. 3, in order to manufacture a lithium metal electrode for a lithium secondary battery according to an embodiment of the present invention, a coating layer 20 including silver (Ag) was plated and formed on both surfaces of a copper current collector 11 to a thickness of about 300 nm by an electroless plating method.

### <Formation of Protective Layer>

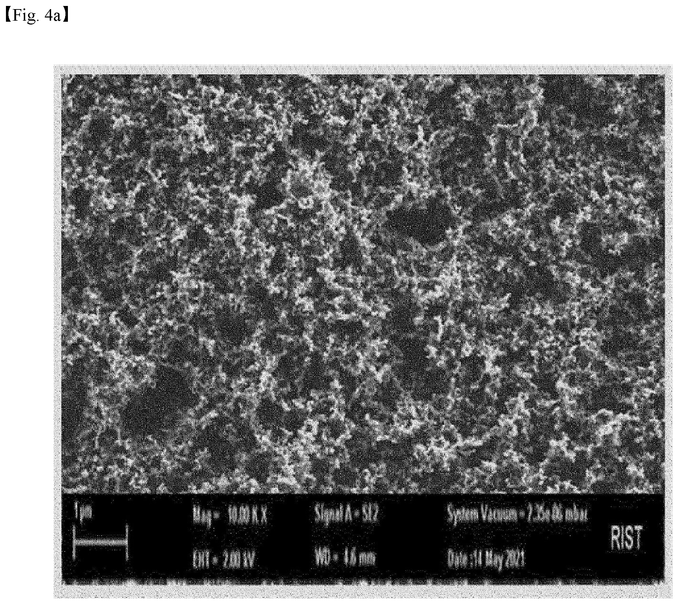

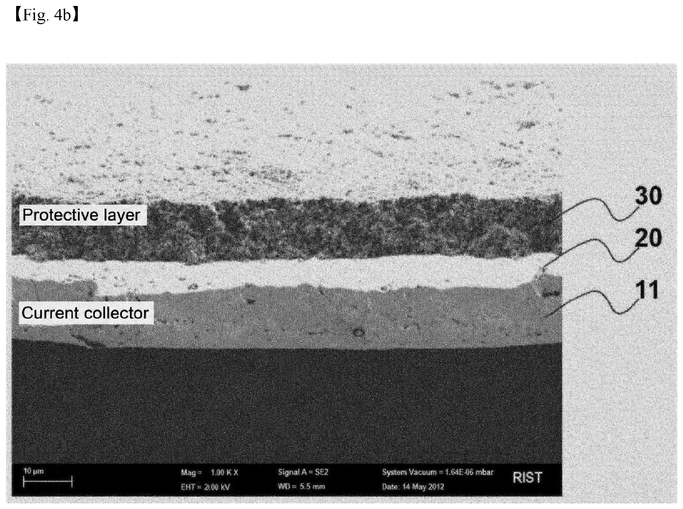

FIG. 4A is a scanning electron microscope (SEM) photograph of a surface when a protective layer is formed on a current collector coated with an alloy material according to an embodiment of the present invention, and FIG. 4B is a scanning electron microscope (SEM) photograph of a cross-section thereof.

Referring to FIGS. 4A and 4B, a protective layer having a thickness of about 5 µm was formed by slurry coating using a comma coater on the copper current collector on which the coating layer including silver was formed. Specifically, the protective layer was formed by mixing acetylene black, which is amorphous carbon, and a binder. At this time, the binder was prepared by adding carboxymethyl cellulose (CMC) and styrene-butadiene rubber (SBR) in amounts of 3.0 wt% each.

### <Lithium Electrodeposition Process>

Thereafter, in order to form a lithium alloy or pure lithium metal between the protective layer and the current collector, an electrodeposition process was used to remove lithium from the lithium supply source 40 and precipitate the lithium between the protective layer and the current collector. The plating solution used for such electrodeposition was prepared by adding, as a nitrogen-based compound, lithium bis(fluorosulfonyl)imide and lithium nitrate in amounts of 40 wt% and 5 wt%, respectively, based on 100 wt% of the plating solution, and adding fluoroethylene carbonate, which is a fluorine-based compound, in an amount of 5 wt% based on 100 wt% of the plating solution, to a mixed solvent in which 1,2-dimethoxyethane (DME) as a first solvent and sulfolane (SL) as a second solvent were mixed at a molar ratio of 90:10. As the lithium supply source 40, a lithium metal plate having a purity of 99.9% or more and a thickness of 500 µm was pressed onto a copper current collector plate (Cu plate) and used.

After the lithium supply source 40 and the current collector were stacked in the plating solution in an electrically insulated state, a current was applied using a power supply in a manner in which the lithium supply source 40 and the current collector were used as (+) and (-) electrodes, respectively, to precipitate lithium between the current collector and the ion concentration protective layer.

The current density of the electrodeposition process was increased stepwise in the order of 0.2 mA/cm², 0.5 mA/cm², and 1 mA/cm², electrodeposition was performed for 5 minutes at each current density, and then the maximum current density was set to 12 mA/cm². The electrodeposition time at the maximum current density was variably set according to the magnitude of the maximum current density by calculating a time at which a final cumulative lithium thickness of 10 µm could be electrodeposited.

### <Example 2>

A lithium metal electrode was manufactured in the same manner as in Example 1, except that ethyl methyl sulfone (EMS) was added as the second solvent in the lithium electrodeposition process and the maximum electrodepositable current was 10 mA/cm².

### <Example 3>

A lithium metal electrode was manufactured in the same manner as in Example 1, except that diphenyl sulfone (DPheS) was added as the second solvent in the lithium electrodeposition process and the maximum electrodepositable current was 10 mA/cm².

### <Example 4>

A lithium metal electrode was manufactured in the same manner as in Example 1, except that the molar ratio of the first solvent to the second solvent was 70:30 in the lithium electrodeposition process and the maximum electrodepositable current was 8 mA/cm².

### <Example 5>

A lithium metal electrode was manufactured in the same manner as in Example 1, except that the molar ratio of the first solvent to the second solvent was 95:5 in the lithium electrodeposition process.

### <Example 6>

A lithium metal electrode was manufactured in the same manner as in Example 1, except that the molar ratio of the first solvent to the second solvent was 60:40 in the lithium electrodeposition process and the maximum electrodepositable current was 6 mA/cm².

### <Example 7>

A lithium metal electrode was manufactured in the same manner as in Example 1, except that the molar ratio of the first solvent to the second solvent was 97:3 in the lithium electrodeposition process and the maximum electrodepositable current was 6 mA/cm².

### <Comparative Example 1>

A lithium metal electrode was manufactured in the same manner as in Example 1, except that the second solvent was not used in the lithium electrodeposition process, only 1,2-dimethoxyethane (DME), which is the first solvent, was used in an amount of 100 mol%, and the maximum electrodepositable current was 4 mA/cm².

### <Comparative Example 2>

A lithium metal electrode was manufactured in the same manner as in Example 1, except that dipropyl sulfone (DProS), which has a dielectric constant of 22.2, was used as the second solvent in the lithium electrodeposition process, and the maximum electrodepositable current was 4 mA/cm².

### Manufacture of All-Solid-State Battery

All-solid-state batteries were manufactured by applying the negative electrodes manufactured according to the above-described Examples and Comparative Examples, and charge/discharge lifespan was evaluated. For evaluation of the all-solid-state battery cells, a pressurized dedicated evaluation cell manufactured by Terra Leader, capable of maintaining an inert atmosphere, was used. For manufacture of the all-solid-state battery cells, a sulfide-based argyrodite (Li₆PS₅Cl) solid electrolyte was used as an electrolyte, and the electrolyte was formed into a pellet having a thickness of about 0.7 mm. In order to secure a dense electrolyte, pressure was applied at 370 MPa.

Lithium having a thickness of 0.5 mm was attached to one surface of the electrolyte as a reference electrode, and the negative electrodes manufactured according to the Examples and Comparative Examples were attached to the opposite surface. The reference electrode and the evaluation electrode were pressed at a pressure of 50 MPa.

Lithium having a thickness of 0.5 mm was attached to one surface of the electrolyte as a reference electrode, and the negative electrodes manufactured according to the Examples and Comparative Examples were attached to the opposite surface.

### <Evaluation Example 1>

Table 1 below shows data on solvent conditions in the plating solution, maximum electrodepositable current, degree of LiF generation, degree of solvent decomposition, resistance of an interfacial layer, and charge/discharge performance for Examples using a mixed solvent and Comparative Example 1 using a single solvent.

**Maximum current density (mA/cm²):** The maximum current density means a limit of current density at which lithium electrodeposited according to the above process can be precipitated between the ion concentration protective layer and the current collector, and the maximum current density was measured.

**Degree of LiF generation:** Components on a surface of the protective layer were analyzed by X-ray photoelectron spectroscopy (XPS) on the surface of the protective layer after the electrodeposition process. XPS analysis was performed using Nexsa G2 equipment manufactured by Thermo Fisher (X-ray beam size: 400 µm, energy resolution: 0.59 eV, acceleration voltage: 12 kV/10 mA, minimum analysis area: 10 µm, step size: 0.1 eV). In an F 1s spectrum obtained by XPS, a peak appearing at 684 eV to 686 eV was classified as a peak of a LiF component, and a peak appearing at 687 eV to 689 eV was classified as a peak of a FSO₂ component.

Imax(LiF)/Imax(FSO₂) was calculated from the maximum size Imax(LiF) of the LiF peak, which is a solvent decomposition product, and the maximum size Imax(FSO₂) of the FSO₂ peak, which is a salt decomposition reaction product, to compare the degree of generation of solvent decomposition products. In addition, [Area(LiF)]/[Area(LiF)+Area(FSO₂)]×100 was calculated from Area(LiF) and Area(FSO₂), which are the areas of the respective peaks in XPS, to compare the degree of generation of solvent decomposition products.

Meanwhile, in an N 1s spectrum obtained by XPS, a peak appearing at 399 eV to 401 eV was classified as a peak of an N-SOₓ bonding component, and a peak appearing at 407 eV to 409 eV was classified as a peak of a NO₃ component.

Imax(NO₃⁻)/Imax(N-SOₓ) was calculated from the maximum size Imax(NO₃⁻) of the NO₃⁻peak, which is a solvent decomposition product, and the maximum size Imax(N-SOₓ) of the N-SOₓ peak, which is a salt decomposition reaction product, to compare the degree of generation of solvent decomposition products.

In addition, [Area(NO₃⁻)]/[Area(N-SOₓ)+Area(NO₃⁻)]×100 was calculated from Area(NO₃⁻) and Area(N-SOₓ), which are the areas of the respective peaks in XPS, to compare the degree of generation of solvent decomposition products.

**Resistance analysis of protective layer:** Electrochemical impedance spectroscopy (EIS) was performed to analyze interfacial resistance of the protective layer. For EIS analysis, symmetric coin cells were prepared using electrodeposited lithium including the protective layer prepared according to the Examples and Comparative Examples. For preparing the coin cells, a Celgard 2400 separator and an electrolyte solution in which 1 M lithium hexafluorophosphate (LiPF₆), 1.5 wt% vinylene carbonate (VC), 2 wt% fluoroethylene carbonate (FEC), and the like were dissolved in a solvent of ethyl carbonate (EC)/ethyl methyl carbonate (EMC)=3/7 were used.

**EIS analysis was performed using a potentiostatic impedance analyzer (Biologic VSP300, measurement frequency:** 1 MHz to 0.1 Hz, oscillation voltage: 10 mV) and the coin cells, and charge transfer resistance (Rct), solid electrolyte interphase resistance (RSEI), and total resistance (Rtotal) were measured from EIS curves.

**Number of charge/discharge performance cycles:** The reference electrode and the evaluation electrode were attached to the solid electrolyte at a pressure of 50 MPa, and pressure was applied at 16 MPa in the dedicated evaluation cell during charge/discharge evaluation. The charge/discharge evaluation was performed by defining, as one cycle, charging at a constant current of 2 mA/cm² for 0.5 hours and discharging at a constant current of 2 mA/cm² for 0.5 hours. The charge/discharge lifespan was defined as ending when a short circuit occurred between the reference electrode and the evaluation electrode during charging and discharging or when a voltage between the two electrodes exceeded 2 V.

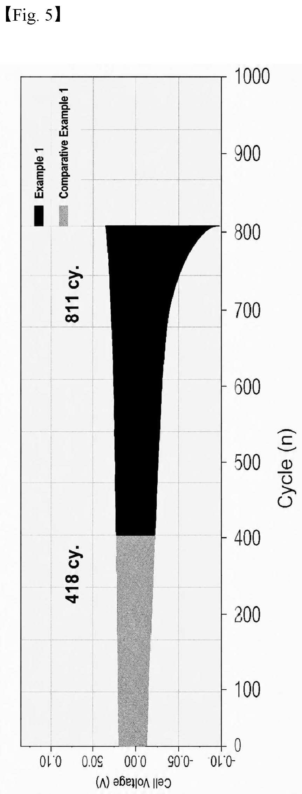

FIG. 5 is a graph showing lifespan evaluation of all-solid-state battery cells using lithium negative electrodes according to Examples and Comparative Examples of the present invention.

Referring to FIG. 5, it can be confirmed that the battery cell lifespan of Example 1 was 811 cycles, and the battery cell lifespan of Comparative Example 1 was 418 cycles, and thus Example 1 had superior battery cell lifespan characteristics compared to Comparative Example 1.

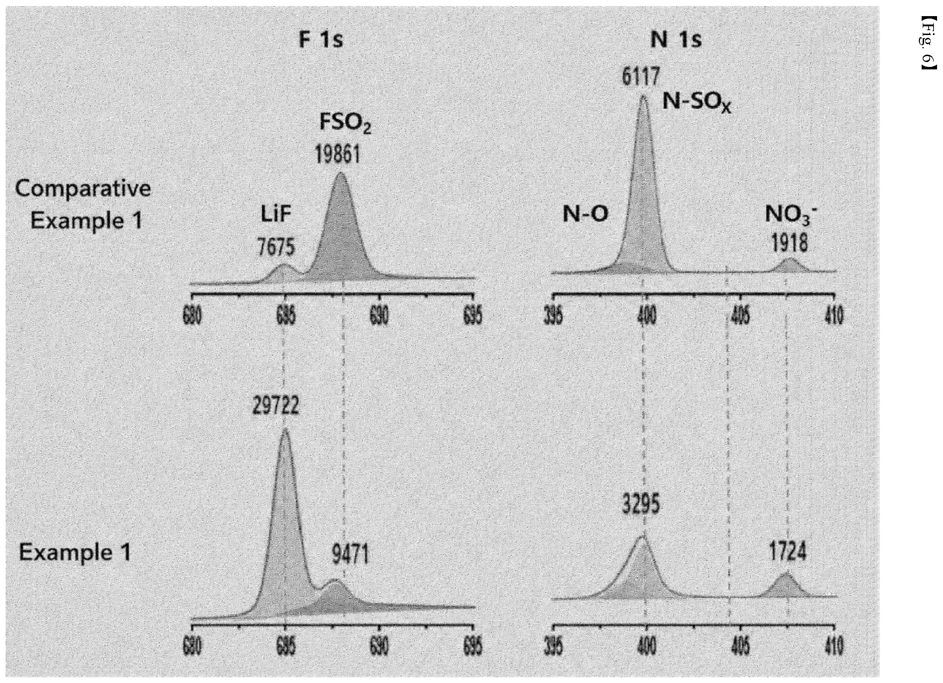

FIG. 6 is a graph comparing XPS surface analysis of surfaces of protective layers of electrodeposited lithium negative electrodes according to Examples and Comparative Examples of the present invention.

FIG. 6 is an XRD surface analysis graph of Comparative Example 1 and Example 1, and it can be confirmed that the LiF peak value of Example 1 was higher than that of Comparative Example 1, and the XRD peak values of FSO₂, N-SOₓ, and NO₃ were lower than those of Comparative Example 1.

**[Table 1]**

| Classification | Solvent condition in plating solution | | | | | Maximum Electrode positable Current [mA/cm² ] | LiF generation level | | Solvent decomposition level | | Charge/ Discharge Performance Cycles |
|---|---|---|---|---|---|---|---|---|---|---|---|
| | First Solvent | Second Solvent | Dielectric Constant of Second Solvent | Content of First Solvent [mol%] | Content of Second Solvent [mol%] | | Eq 1^{*} | Eq 2^{**} | Eq 3^{***} | Eq 4^{****} | |
| Example 1 | DME | SL | 40.4 | 90 | 10 | 12 | 3.1 | 83 | 0.52 | 25 | 811 |
| Comparative Example 1 | DME | - | - | 100 | - | 4 | 0.4 | 11 | 0.31 | 6 | 418 |
| *: Iₘₐₓ(LiF)/Iₘₐₓ(FSO₂) | | | | | | | | | | | |
| **: [Area(LiF)]+[Area(LiF) + Area(FSO₂)] × 100 (%) | | | | | | | | | | | |
| ***: Iₘₐₓ(NO₃⁻)/Iₘₐₓ(N-SO_{X}) | | | | | | | | | | | |
| ****: [Area(NO₃⁻)]+[Area(NO₃⁻) + Area(N-SO_{X})] × 100 (%) | | | | | | | | | | | |

Referring to Table 1, FIG. 5, and FIG. 6, it was confirmed that, in the lithium electrodeposition process, compared to Comparative Example 1 using a single solvent as the solvent in the plating solution, by using sulfolane, which is a sulfone-based high-dielectric-constant solvent, together with the DME solvent, the maximum electrodepositable current was high, Equations 1 to 4 relating to the degree of LiF generation and the degree of solvent decomposition had high values, and the number of charge/discharge performance cycles of the battery was excellent.

Table 2 below shows protective layer resistance analysis values of Example 1 and Comparative Example 1, specifically measured values of charge transfer resistance (Rct), solid electrolyte interphase resistance (RSEI), and total resistance (Rtotal).

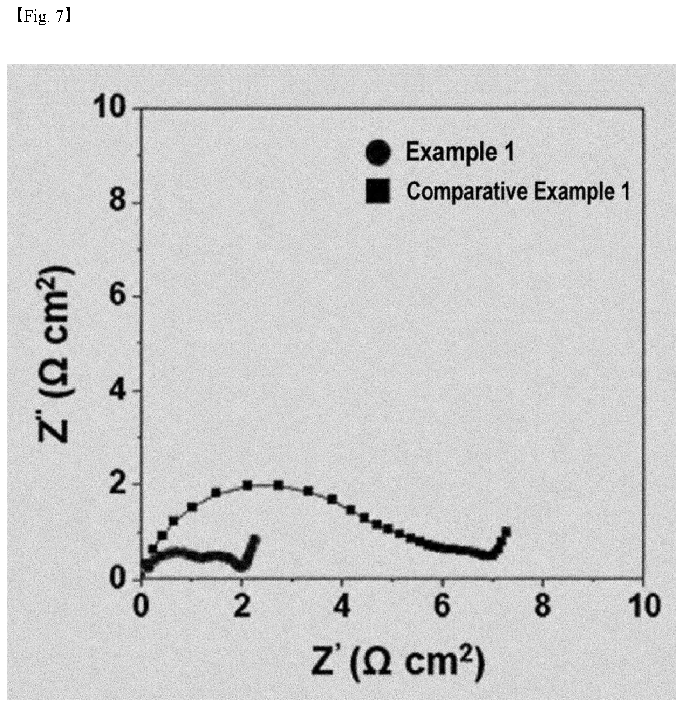

FIG. 7 is a graph analyzing impedance and resistance of electrodeposited lithium according to Examples and Comparative Examples of the present invention.

**[Table 2]**

| | R_{ct} | R_{SEI} | Rₜₒₜₐₗ |
|---|---|---|---|
| Example 1 | 1.2 | 0.8 | 2.0 |
| Comparative Example 1 | 5.0 | 2.2 | 7.2 |

Referring to Table 2 and FIG. 7, it was confirmed that, compared with Example 1 using a mixed solvent, Comparative Example 1 using a single solvent had high charge transfer resistance, SEI layer resistance, and total resistance of electrodeposited lithium including the protective layer.

### <Evaluation Example 2>

Table 3 below shows data on maximum electrodepositable current, degree of LiF generation, degree of solvent decomposition, resistance of an interfacial layer, and charge/discharge performance according to the type of sulfone-based high-dielectric-constant solvent used as the second solvent.

**[Table 3]**

| Classification | Solvent condition in plating solution | | | | | Maximum Electrode positable Current [mA/cm² ] | LiF generation level | | Solvent decomposition level | | Interface layer total resistance [Ω.cm²] | Charge/ Discharge Performance Cycles |
|---|---|---|---|---|---|---|---|---|---|---|---|---|
| | First Solvent | Second Solvent | Dielectric Constant of Second Solvent | Content of First Solvent [mol%] | Content of Second Solvent [mol%] | | Eq 1^{*} | Eq 2^{**} | Eq 3^{***} | Eq 4^{****} | | |
| Example 1 | DME | SL | 40.4 | 90 | 10 | 12 | 3.1 | 83 | 0.52 | 25 | 2.0 | 811 |
| Example 2 | DME | EMS | 28.5 | 90 | 10 | 10 | 2.8 | 75 | 0.48 | 22 | 2.2 | 755 |
| Example 3 | DME | Dphes | 33.8 | 90 | 10 | 8 | 2.5 | 70 | 0.45 | 21 | 2.5 | 810 |
| Comparative Example 2 | DME | DProS | 22.2 | 90 | 10 | 4 | 1.2 | 48 | 0.35 | 10 | 4.8 | 503 |
| *: Iₘₐₓ(LiF)/Iₘₐₓ(FSO₂) | | | | | | | | | | | | |
| **: [Area(LiF)]+[Area(LiF) + Area(FSO₂)] × 100 (%) | | | | | | | | | | | | |
| ***: Iₘₐₓ(NO₃⁻)/Iₘₐₓ(N-SO_{X}) | | | | | | | | | | | | |
| ****: [Area(NO₃⁻)]+[Area(NO₃⁻) + Area(N-SO_{X})] × 100 (%) | | | | | | | | | | | | |

Referring to Table 3, it was confirmed that, when the dielectric constant of the second solvent had a value lower than 25 as in Comparative Example 2, the maximum electrodepositable current was low, the values of Equations 1 and 2, which are indices of the degree of LiF generation, were low, and the values of Equations 3 and 4, which are indices of the degree of solvent decomposition, were lower than those of Examples 1 to 3. In the case of Examples 1 to 3, it was confirmed that, as the dielectric constant of the second solvent satisfied 25 or more, the maximum electrodepositable current, the degree of LiF generation, and the degree of solvent decomposition were high.

### <Evaluation Example 3> - Content Ratio of First Solvent and Second Solvent

Table 4 below shows data on maximum electrodepositable current, degree of LiF generation, degree of solvent decomposition, resistance of an interfacial layer, and charge/discharge performance according to the content ratio of the first solvent and the second solvent and according to the type of sulfone-based high-dielectric-constant solvent.

**[Table 4]**

| Classification | Solvent condition in plating solution | | | | | Maximu m Electrode positable Current [mA/ | LiF generation level | | Solvent decomposition level | | Interface layer total resistance [Ω.cm²] | Charge/ Discharge Performance Cycles |
|---|---|---|---|---|---|---|---|---|---|---|---|---|
| | First Solvent | Second Solvent | Dielectric Constant of Second Solvent | Content of First Solvent [mol%] | Content of Second Solvent [mol%] | | Eq 1^{*} | Eq 2" | Eq 3^{***} | Eq 4^{****} | | |
| Example 1 | DME | SL | 40.4 | 90 | 10 | 12 | 3.1 | 83 | 0.52 | 25 | 2.0 | 811 |
| Example 4 | DME | SL | 40.4 | 70 | 30 | 8 | 2.7 | 74 | 0.47 | 21 | 3.1 | 780 |
| Example 5 | DME | SL | 40.4 | 95 | 5 | 10 | 2.6 | 72 | 0.46 | 20 | 1.8 | 823 |
| Example 6 | DME | SL | 40.4 | 60 | 40 | 6 | 1.5 | 55 | 0.32 | 10 | 4.2 | 621 |
| Example 7 | DME | SL | 40.4 | 97 | 3 | 6 | 1.8 | 58 | 0.35 | 12 | 4.5 | 598 |
| Comparative Exa mple 2 | DME | DProS | 22.2 | 90 | 10 | 4 | 1.2 | 48 | 0.35 | 10 | 4.8 | 503 |
| *: Iₘₐₓ(LiF)/Iₘₐₓ(FSO₂) | | | | | | | | | | | | |
| **: [Area(LiF)]+[Area(LiF) + Area(FSO₂)] × 100 (%) | | | | | | | | | | | | |
| ***: Iₘₐₓ(NO₃⁻)/Iₘₐₓ(N-SO_{X}) | | | | | | | | | | | | |
| ****: [Area(NO₃⁻)]+[Area(NO₃⁻) + Area(N-SO_{X})] × 100 (%) | | | | | | | | | | | | |

Referring to Table 4, in Examples 1, 4, 5, 6, and 7, it was confirmed that Example 6, in which the mol% of the second solvent was excessively high, and Example 7, in which the mol% of the second solvent was excessively low, had somewhat lower maximum electrodepositable current and somewhat lower values of Equations 1 and 2, which are indices of the degree of LiF generation, and Equations 3 and 4, which are indices of the degree of solvent decomposition, than Examples 1, 4, and 5 in which the mol% of the second solvent in the plating solution was included within an appropriate range, because the content of the sulfone-based high-dielectric-constant solvent was insufficient and thus the ability to dissociate salt was insufficient, causing decomposition products in the form of incompletely dissociated ion pairs in the plating solution to accumulate on the electrode surface and hinder smooth movement of lithium ions.

It was confirmed that Example 7, in which the mol% of the second solvent was excessively low, had somewhat lower maximum electrodepositable current and somewhat lower values of Equations 1 to 4 than Examples 1, 4, and 5 because the second solvent had high viscosity and smooth movement of lithium ions was hindered due to the effect of increased viscosity.

However, it was confirmed that Examples 6 and 7 had higher maximum electrodepositable current and higher values of Equations 1 to 4 than Comparative Example 2 in which the dielectric constant of the second solvent was low.

The present invention is not limited to the above Examples and may be manufactured in various different forms. A person having ordinary skill in the art to which the present invention pertains will understand that the present invention may be embodied in other specific forms without changing the technical spirit or essential features of the present invention. Therefore, the above-described Examples should be understood as illustrative in all respects and not restrictive.

## Claims

1. A lithium metal electrode comprising:
a current collector;
a metal layer positioned on at least one surface of the current collector and comprising a lithium alloy;
a protective layer positioned on the metal layer; and
a coating layer disposed in at least a partial region inside the protective layer, between the metal layer and the protective layer, and on the protective layer, and comprising at least a portion of LiF,
wherein, when measured by X-ray photoelectron spectroscopy (XPS), an intensity of a peak appearing at 684 eV to 686 eV is greater than an intensity of a peak appearing at 687 eV to 689 eV.

2. The lithium metal electrode of claim 1,
wherein the coating layer satisfies the following Equation 1 when measured by X-ray photoelectron spectroscopy (XPS): <Equation 1> $Imax \left(LiF\right) / Imax \left({FSO}_{2}\right) \geq 1.5$
wherein, in Equation 1, an intensity of a peak appearing at 684 eV to 686 eV is referred to as Imax(LiF), and an intensity of a peak appearing at 687 eV to 689 eV is referred to as Imax(FSO₂).

3. The lithium metal electrode of claim 2,
wherein Equation 1 is 2.0 or more.

4. The lithium metal electrode of claim 1,
wherein the coating layer satisfies the following Equation 2 when measured by X-ray photoelectron spectroscopy (XPS): <Equation 2> $\left[Area\left(LiF\right)\right] / \left[Area\left(LiF\right)+Area\left({FSO}_{2}\right)\right] \times 100 \geq 55.0$
wherein, in Equation 2, an area of a peak appearing at 684 eV to 686 eV is referred to as Area(LiF), and an area of a peak appearing at 687 eV to 689 eV is referred to as Area(FSO₂).

5. The lithium metal electrode of claim 1,
wherein the coating layer satisfies the following Equation 3 when measured by X-ray photoelectron spectroscopy (XPS): <Equation 3> $Imax \left(N-{SO}_{x}\right) / Imax \left({{NO}_{3}}^{-}\right) \geq 0.30$
wherein, in Equation 3, an intensity of a peak appearing at 399 eV to 401 eV is referred to as Imax(N-SOₓ), and an intensity of a peak appearing at 407 eV to 409 eV is referred to as Imax(NO₃).

6. The lithium metal electrode of claim 1,
wherein the coating layer satisfies the following Equation 4 when measured by X-ray photoelectron spectroscopy (XPS): <Equation 4> $\left[Area\left(N-{SO}_{x}\right)\right] / \left[Area\left(N-{SO}_{x}\right)+Area\left({{NO}_{3}}^{-}\right)\right] \times 100 \geq 10.0$
wherein, in Equation 4, an area of a peak appearing at 399 eV to 401 eV is referred to as Area(N-SOₓ), and an area of a peak appearing at 407 eV to 409 eV is referred to as Area(NO₃).

7. The lithium metal electrode of claim 1,
wherein a total resistance (Rtotal) of an interface between the protective layer and the coating layer is 1.5 Ω·cm² to 4.6 Ω·cm².

8. The lithium metal electrode of claim 1,
wherein the intensity of the peak appearing at 684 eV to 686 eV, Imax(LiF), is 25,000 or more.

9. The lithium metal electrode of claim 1,
wherein the intensity of the peak appearing at 687 eV to 689 eV, Imax(FSO₂), is 11,000 or less.

10. A method for manufacturing a lithium metal electrode, comprising:
forming a coating layer on at least one surface of a current collector using a coating composition comprising a lithiophilic component;
forming a protective layer on a surface of the coating layer;
placing the current collector on which the coating layer and the protective layer are formed in a plating solution comprising a plurality of solvents, and then placing a lithium supply source at a predetermined distance from the protective layer; and
applying a current between the current collector and the lithium supply source to form a metal layer comprising a lithium alloy in which the lithiophilic component included in the coating layer and lithium precipitated from the lithium supply source are alloyed,
wherein at least one solvent among the plurality of solvents has a dielectric constant of 25 or more.

11. The method for manufacturing a lithium metal electrode of claim 10,
wherein at least one solvent among the plurality of solvents has a dielectric constant of 25 to 80.

12. The method for manufacturing a lithium metal electrode of claim 10,
wherein a content of the solvent having a dielectric constant of 25 or more is 3 mol% to 40 mol% based on 100 mol% of all solvents.

13. The method for manufacturing a lithium metal electrode of claim 10,
wherein the solvent having a dielectric constant of 25 or more is a sulfone-based solvent.

14. The method for manufacturing a lithium metal electrode of claim 13,
wherein the sulfone-based solvent comprises at least one of ethyl methyl sulfone (EMS), diphenyl sulfone (DPheS), sulfolane (SL), dimethyl sulfone, diethyl sulfone (DS), and methyl sulfone.

15. The method for manufacturing a lithium metal electrode of claim 10,
wherein, in applying the current between the current collector and the lithium supply source to form the metal layer comprising the lithium alloy in which the lithiophilic component included in the coating layer and lithium precipitated from the lithium supply source are alloyed,
the method comprises electrodepositing at a maximum current density in a range of 6 mA/cm² to 12 mA/cm².
